# EUROPEAN PATENT SPECIFICATION

(11) **EP 3 633 209 B1**
(45) Date of publication and mention of the grant of the patent: **22.10.2025**
(21) Application number: 18810821.1
(22) Date of filing: 21.05.2018
(51) Int. Cl.: F04D 19/00, F04D 29/36, F04D 29/38, F04D 29/28, F04D 29/32, F24F 1/48, F04D 29/26, F24F 1/50, F24F 1/00, B61D 27/00

(54) **PROPELLER-SHAPED IMPELLER AND RAILWAY CARRIAGE AIR-CONDITIONING APPARATUS**
PROPELLERFÖRMIGES LAUFRAD UND KLIMATISIERUNGSANLAGE FÜR EISENBAHNWAGEN
IMPULSEUR EN FORME D'HÉLICE ET APPAREIL DE CLIMATISATION DE WAGON DE CHEMIN DE FER

(30) Priority: 31.05.2017 JP 2017107436
(43) Date of publication of application: 08.04.2020
(73) Proprietor: Mitsubishi Electric Corporation, Chiyoda-ku Tokyo 100-8310 (JP)
(72) Inventor: MURAKAMI Hiroaki, Tokyo 100-8310 (JP); SHINGU Wahei, Tokyo 100-8310 (JP); NAKASHIMA Seiji, Tokyo 100-8310 (JP)
(74) Representative: Studio Torta S.p.A.
(86) International application number: PCT/JP2018/019502
(87) International publication number: WO 2018/221295

(56) References cited:
- WO-A1-2013/150711
- JP-A- 2003 048 536
- JP-A- 2003 048 536
- JP-A- 2007 023 964
- JP-A- 2008 019 832
- JP-A- 2008 019 832
- JP-U- S 615 399
- JP-U- S 615 399
- JP-U- S5 246 129
- JP-U- S5 246 129

## Description

### Technical Field

The present disclosure relates to a propeller-shaped impeller and a railway carriage air-conditioning apparatus.

### Background Art

A railway carriage air-conditioning apparatus for air-conditioning a railway carriage cabin includes an outdoor unit accommodated in an outdoor-unit chamber on the ceiling of a railway carriage. The outdoor unit includes an outdoor heat exchanger that exchanges heat with air that passes through the exchanger, and an outdoor blower that produces an airflow passing through the exchanger. The outdoor blower includes a propeller-shaped impeller and a motor that rotates the impeller.

JP2006-273099 describes an outdoor blower that draws air into an outdoor-unit chamber through the sides of the outdoor-unit chamber, allows the drawn air to pass through the outdoor heat exchanger, and then discharges the air above the outdoor-unit chamber. The operation of the outdoor blower that produces such an airflow will be hereafter referred to as upward blowing.

JP2003-48536 describes an outdoor blower that draws air into an outdoor-unit chamber from above the outdoor-unit chamber, allows the drawn air to pass through the outdoor heat exchanger, and then discharges the air to the sides of the outdoor-unit chamber, in contrast to the outdoor blower described in JP2006-273099. The operation of the outdoor blower that produces such an airflow will be hereafter referred to as downward blowing.

JP2008-019832 A discloses a blower, which easily changes a blowing direction with the usage of one kind of a fan or a bellmouth, and a refrigerating unit using the same.

### Summary of Invention

### Technical Problem

If the propeller-shaped impeller can be attached to the motor upside down, the outdoor blower described in JP2006-273099 can blow air downward, as in the outdoor blower according to JP2003-48536. If the propeller-shaped impeller can be attached to the motor upside down, the outdoor blower described in JP2003-48536 can blow air upward, as in the outdoor blower according to JP2006-273099.

However, the propeller-shaped impeller turned upside down can contact other components without an enough space in the outdoor-unit chamber in the railway carriage. Thus, two different propeller-shaped impellers with the same diameter are to be prepared separately for upward blowing and downward blowing. To reduce the variety of propeller-shaped impellers to be prepared, a propeller-shaped impeller usable for both upward blowing and downward blowing has been awaited.

One or more aspects of the present disclosure are directed to a propeller-shaped impeller usable upside down less likely to contact other components, and a railway carriage air-conditioning apparatus including the impeller.

### Solution to Problem

In response to the above issue, a propeller-shaped impeller according to the appended set of claims includes a boss rotatable with a rotation shaft of a motor having a bearing surface from which the rotation shaft protrudes, the boss being configured to be placed on the bearing surface as being fitted to the rotation shaft of the motor, and an airflow producing unit including a plurality of blades protruding from the boss outwardly in a radial direction of the rotation shaft and rotatable together with the boss to produce an airflow. The boss includes a first end surface to come in contact with the bearing surface when the boss is fitted to the rotation shaft with one end of the boss in a thickness direction parallel to the rotation shaft facing the bearing surface, and a second end surface to come in contact with the bearing surface when the boss is fitted to the rotation shaft with another end of the boss in the thickness direction facing the bearing surface; each of the plurality of blades has a first free end and a second free end along the thickness direction, the first and second free ends being opposite to each other, the first free end being arranged on the side of the first end surface and the second free end being arranged on the side of the second end surface; and a degree of symmetry defined by A/B is greater than 1.0 and lower than or equal to 1.3, where A is a height of the airflow producing unit from the first end surface to the first free end along the thickness direction, B is a height of the airflow producing unit from the second end surface to the second free end along the thickness direction, and A > B; and in that the airflow producing unit has a cutout to avoid contact with the motor .

### Advantageous Effects of Invention

The propeller-shaped impeller according to one or more aspects of the present disclosure has the degree of symmetry greater than 1.0 and lower than or equal to 1.3, and is thus less likely to contact other components when used upside down.

### Brief Description of Drawings

FIG. 1A is a partial cross-sectional view of an outdoor-unit chamber accommodating an outdoor blower according to Embodiment 1 blowing air upward, taken along line AA-AA in FIG. 8A;
FIG. 1B is a partial cross-sectional view of the outdoor-unit chamber accommodating the outdoor blower according to Embodiment 1 blowing air downward, taken along line AA-AA;
FIG. 2 is a side view of the outdoor blower according to Embodiment 1;
FIG. 3A is a side view of an outdoor blower according to Embodiment 2;
FIG. 3B is a plan view of a part of the outdoor blower according to Embodiment 2;
FIG. 4A is a side view of a part of an outdoor blower according to Embodiment 3;
FIG. 4B is a cross-sectional view of a blade of the outdoor blower according to Embodiment 3;
FIG. 5 is a side view of an outdoor blower according to Embodiment 4;
FIG. 6A is a partial cross-sectional view of an outdoor-unit chamber accommodating an outdoor blower according to a comparative example blowing air upward, taken along line AA-AA;
FIG. 6B is a partial cross-sectional view of the outdoor-unit chamber accommodating the outdoor blower according to the comparative example blowing air downward, taken along line AA-AA;
FIG. 7 is a partial cross-sectional plan view of an inside of an outdoor-unit chamber of a railway carriage air-conditioning apparatus according to Embodiment 1;
FIG. 8A is a plan view of the railway carriage air-conditioning apparatus according to Embodiment 1; and
FIG. 8B is a functional block diagram of an air-conditioning apparatus according to Embodiment 1.

### Description of Embodiments

A railway carriage air-conditioning apparatus according to one or more embodiments of the present disclosure will now be described with reference to the drawings. Throughout the drawings, the same or corresponding components are given the same reference numerals.

### Embodiment 1

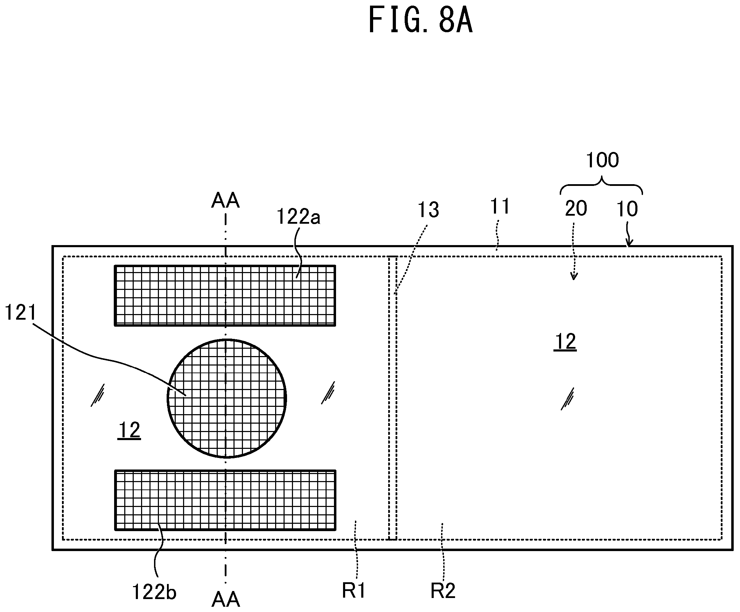

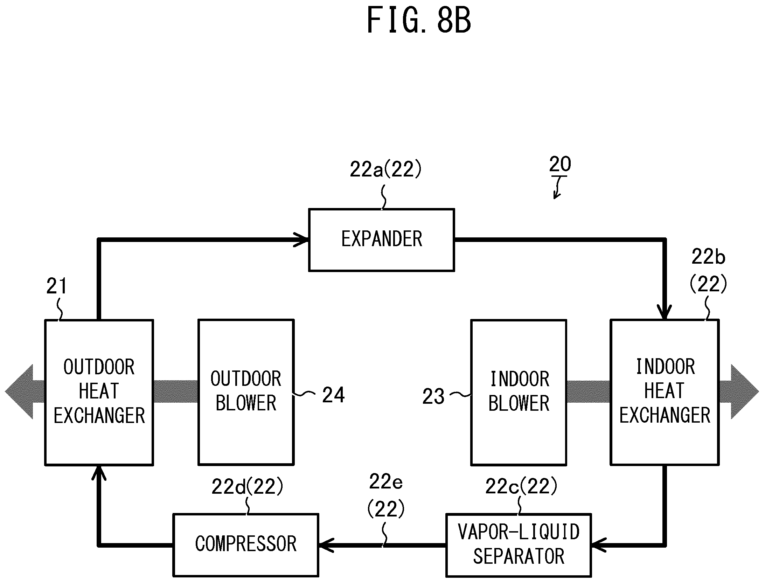

The overall structure of a railway carriage air-conditioning apparatus 100 according to the present embodiment will be described with reference to FIGS. 8A and 8B. The railway carriage air-conditioning apparatus 100 includes a housing 10 shown in FIG. 8A, and an air-conditioning apparatus 20 shown in FIG. 8B accommodated in the housing 10.

The housing 10 shown in FIG. 8A includes a box-shaped base frame 11 with an upper opening, a cover 12 that closes the upper opening of the base frame 11, and a partition plate 13 that partitions the interior space defined by the base frame 11 and the cover 12. The partition plate 13 partitions the interior space of the housing 10 into an outdoor-unit chamber R1 and an indoor-unit chamber R2 in a direction in which a railway carriage travels.

The cover 12 has a first vent 121 and two second vents 122a and 122b in an area that covers the outdoor-unit chamber R1. The second vents 122a and 122b are each spaced apart from the first vent 121. The outdoor-unit chamber R1 communicates with the outside through the first vent 121 and the second vents 122a and 122b.

The first vent 121 is circular in a plan view. The second vents 122a and 122b are rectangular in a plan view and are elongated in the direction in which the railway carriage travels. The two second vents 122a and 122b are spaced apart across the first vent 121 in the width direction of the railway carriage.

The air-conditioning apparatus 20 shown in FIG. 8B provides a refrigerating cycle using refrigerant to air-condition a railway carriage chamber. The chamber herein refers to a space in the railway carriage defined for passengers or staff, and is specifically a cabin or an operator cab.

The air-conditioning apparatus 20 includes an outdoor heat exchanger 21 that allows refrigerant to flow through the inside and a collaborative system 22 that provides a refrigerating cycle together with the outdoor heat exchanger 21 using the refrigerant.

The function of the outdoor heat exchanger 21 and the components and the function of the collaborative system 22 for cooling a chamber will now be described below by way of example. The outdoor heat exchanger 21 functions as a condenser that exchanges heat between refrigerant and air to condense the refrigerant.

The collaborative system 22 includes an expander 22a that expands the refrigerant condensed by the outdoor heat exchanger 21, an indoor heat exchanger 22b that functions as an evaporator for vaporizing the expanded refrigerant, a vapor-liquid separator 22c that separates a gaseous refrigerant from a liquid refrigerant, and a compressor 22d that compresses the gaseous refrigerant. The collaborative system 22 also includes a refrigerant pipe 22e that connects the outdoor heat exchanger 21, the expander 22a, the indoor heat exchanger 22b, the vapor-liquid separator 22c, and the compressor 22d to one another to allow the refrigerant to flow through these components.

The air-conditioning apparatus 20 includes an indoor blower 23 that facilitates heat exchange between the indoor heat exchanger 22b and air, and an outdoor blower 24 that facilitates heat exchange between the outdoor heat exchanger 21 and air. The indoor blower 23 includes a centrifugal blower. The outdoor blower 24 includes an axial-flow blower.

The indoor blower 23 feeds air that has exchanged heat with the indoor heat exchanger 22b into the railway carriage chamber. The outdoor blower 24 takes in air from outside the railway carriage, allows the air to flow through the outdoor heat exchanger 21, and discharges the air out of the railway carriage.

Among the components of the air-conditioning apparatus 20 described above, the outdoor heat exchanger 21 and the outdoor blower 24 are accommodated in the outdoor-unit chamber R1 shown in FIG. 8A. The expander 22a, the indoor heat exchanger 22b, the vapor-liquid separator 22c, the compressor 22d, and the indoor blower 23 are accommodated in the indoor-unit chamber R2 shown in FIG. 8A. The refrigerant pipe 22e extends through the partition plate 13 across both the outdoor-unit chamber R1 and the indoor-unit chamber R2.

The railway carriage air-conditioning apparatus 100 according to the present embodiment is characterized by the internal structure of the outdoor-unit chamber R1. The internal structure of the outdoor-unit chamber R1 will now be described below in detail.

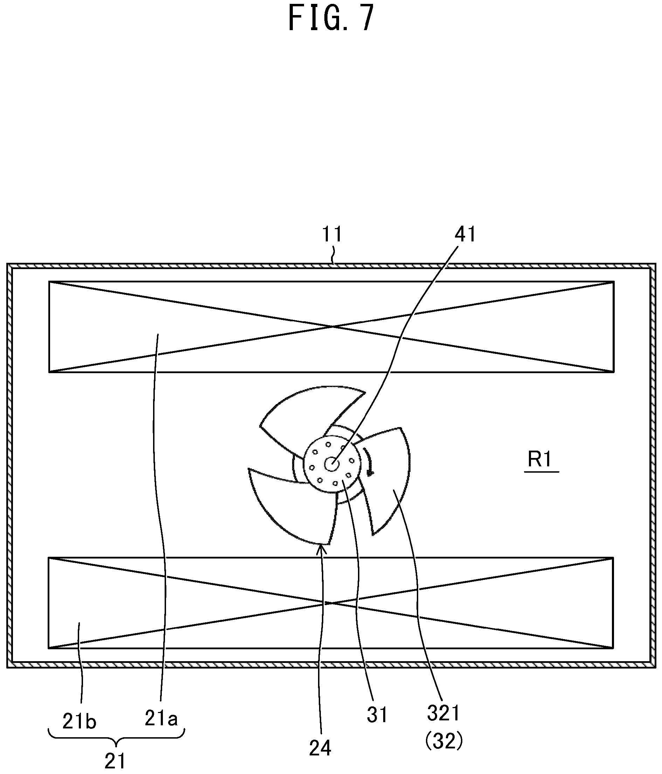

As shown in FIG. 7, the outdoor heat exchanger 21 includes a first outdoor heat exchanger 21a and a second outdoor heat exchanger 21b located across both sides of the outdoor blower 24 in the width direction of the railway carriage in a plan view. The outdoor blower 24 is thus located between the first and second outdoor heat exchangers 21a and 21b.

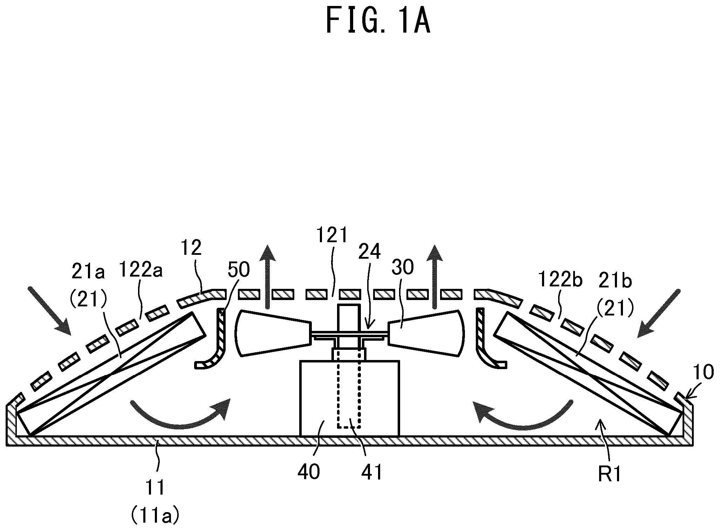

As shown in FIG. 1A, the outdoor blower 24 is mounted on a bottom surface 11a of the base frame 11. The cover 12 facing the bottom surface 11a of the base frame 11 has a level portion in the middle in the width direction of the railway carriage. The level portion has the first vent 121 also shown in FIG. 8A. The cover 12 has, in the width direction of the railway carriage, two shoulder portions that are inclined downward. The inclined portions of the two shoulders have the second vents 122a and 122b also shown in FIG. 8A.

The first outdoor heat exchanger 21a faces the second vent 122a. The second outdoor heat exchanger 21b faces the second vent 122b. The first and second outdoor heat exchangers 21a and 21b are inclined downward along the inclinations of the two shoulders of the cover 12.

The two shoulders of the cover 12 are inclined and the first and second outdoor heat exchangers 21a and 21b are inclined along the inclinations to achieve highly efficient heat exchange while reducing the total height of the outdoor-unit chamber R1 or specifically reducing the height of the base frame 11 from the bottom surface 11a to the first vent 121.

The outdoor blower 24 includes a propeller-shaped impeller 30 for a railway carriage air-conditioning apparatus for producing an airflow, and a motor 40 that rotates the propeller-shaped impeller 30 for a railway carriage air-conditioning apparatus. The motor 40 includes a rotation shaft 41 to which the propeller-shaped impeller 30 for a railway carriage air-conditioning apparatus is fitted. The rotation shaft 41 extends in a direction normal to the bottom surface 11a of the base frame 11. The first vent 121 is located above the propeller-shaped impeller 30 for a railway carriage air-conditioning apparatus fitted to the rotation shaft 41.

A bellmouth 50 is located as the outer periphery of the propeller-shaped impeller 30 for a railway carriage air-conditioning apparatus to surround the propeller-shaped impeller 30. The bellmouth 50 has a tube shape flared toward the bottom surface 11a of the base frame 11.

When rotated by the motor 40, the propeller-shaped impeller 30 for a railway carriage air-conditioning apparatus forms an airflow flowing from the second vents 122a and 122b to the first vent 121 in the outdoor-unit chamber R1. The bellmouth 50 regulates the airflow.

More specifically, the propeller-shaped impeller 30 forms an airflow that flows into the outdoor-unit chamber R1 from the sides of the outdoor-unit chamber R1 through the second vents 122a and 122b, passes through the first and second outdoor heat exchangers 21a and 21b, passes through the bellmouth 50, and flows out from above the outdoor-unit chamber R1 through the first vent 121. This operation of the outdoor blower 24 forming such an airflow will be hereafter referred to as upward blowing.

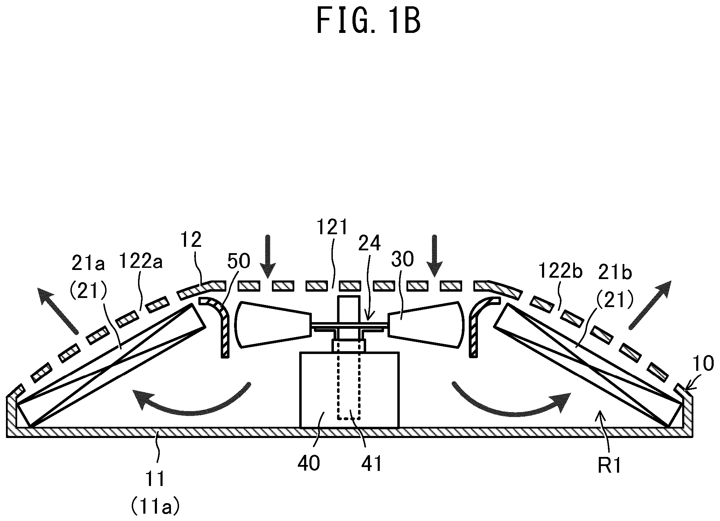

FIG. 1B shows an airflow opposite to the airflow shown in FIG. 1A, that is, an airflow that flows downward into the outdoor-unit chamber R1 from above the outdoor-unit chamber R1, passes through the bellmouth 50, passes through the first and second outdoor heat exchangers 21a and 21b, and flows out from the sides of the outdoor-unit chamber R1. This operation of the outdoor blower 24 forming such an airflow will be hereafter referred to as downward blowing. For downward blowing, the bellmouth 50 is attached with the flared end facing the cover 12.

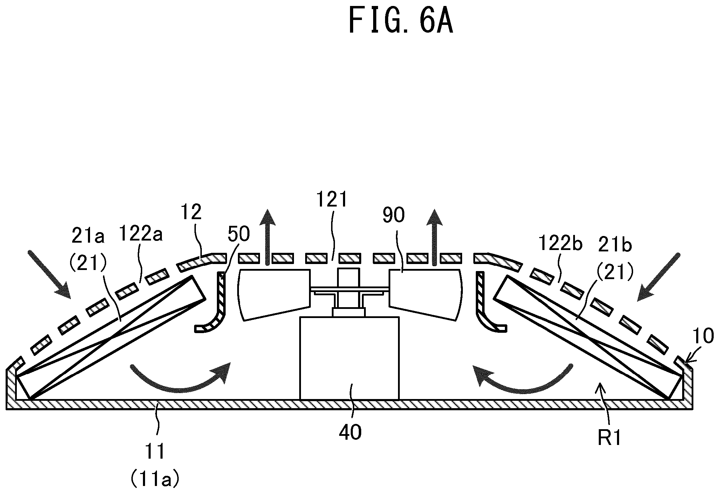

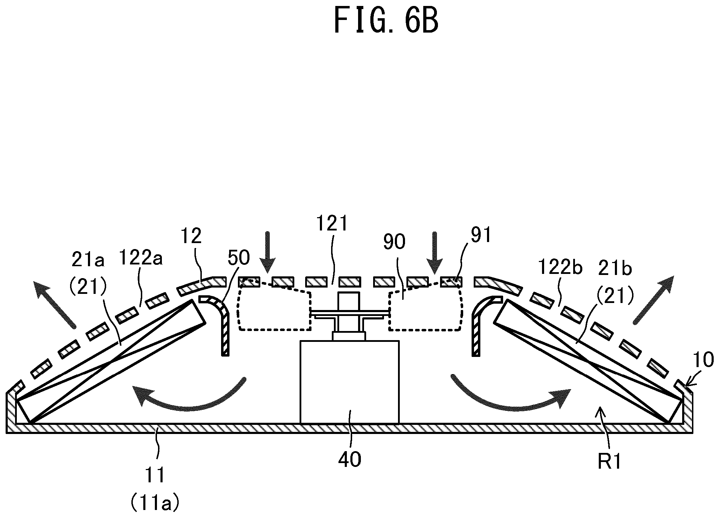

The propeller-shaped impeller 30 for a railway carriage air-conditioning apparatus according to the present embodiment has a shape usable for both upward blowing and downward blowing shown in FIGS. 1A and 1B. To clarify the effects of the shape of the propeller-shaped impeller 30 for a railway carriage air-conditioning apparatus, a comparative example will be described below with reference to FIGS. 6A and 6B.

As shown in FIG. 6A, a propeller-shaped impeller 90 for a railway carriage air-conditioning apparatus according to the comparative example also produces an airflow from the second vents 122a and 122b to the first vent 121. However, the propeller-shaped impeller 90 for a railway carriage air-conditioning apparatus cannot produce an airflow opposite to the airflow shown in FIG. 6A, that is, an airflow from the first vent 121 to the second vents 122a and 122b. This will be described in detail below.

As shown in FIG. 6B, if attachable to the motor 40 upside down or turned over, the propeller-shaped impeller 90 for a railway carriage air-conditioning apparatus can produce an airflow from the first vent 121 to the second vents 122a and 122b. However, when turned upside down, the propeller-shaped impeller 90 for a railway carriage air-conditioning apparatus has an upper end portion 91 contacting the cover 12. The propeller-shaped impeller 90 for a railway carriage air-conditioning apparatus thus cannot produce an airflow shown in FIG. 6B.

To produce an airflow shown in FIG. 6B, a propeller-shaped impeller for a railway carriage air-conditioning apparatus that does not contact the cover 12 is to be prepared separately. Two different propeller-shaped impellers for railway carriage air-conditioning apparatuses with the same diameter are thus to be prepared separately for upward blowing and downward blowing. This increases the variety of propeller-shaped impellers for railway carriage air-conditioning apparatuses to be prepared.

FIG. 6B shows the propeller-shaped impeller 90 for a railway carriage air-conditioning apparatus that contacts the cover 12 by way of example. The part that contacts the propeller-shaped impeller 90 for a railway carriage air-conditioning apparatus is not limited to this example. For railway carriages, the outdoor-unit chamber R1 tends to have a lower height, and thus tends to have almost no excess interior space. This minimizes the clearance between the propeller-shaped impeller 90 for a railway carriage air-conditioning apparatus and the components surrounding the propeller-shaped impeller 90 for a railway carriage air-conditioning apparatus. If turned upside down, the propeller-shaped impeller 90 for a railway carriage air-conditioning apparatus can contact any components, particularly, the motor 40.

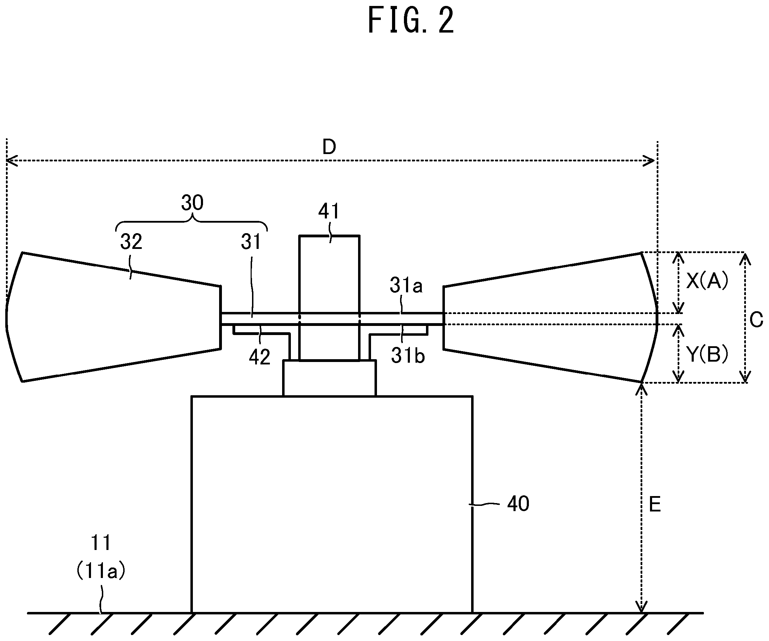

Following the comparative example described above, the present embodiment will be described again with reference to FIG. 2.

As shown in FIG. 2, the propeller-shaped impeller 30 for a railway carriage air-conditioning apparatus according to the present embodiment includes a boss 31 fitted to the rotation shaft 41 of the motor 40, and an airflow producing unit 32 that produces an airflow by rotating together with the boss 31. As shown in FIG. 7, the airflow producing unit 32 includes multiple blades 321 protruding from the boss 31 outwardly in a radial direction of the rotation shaft 41.

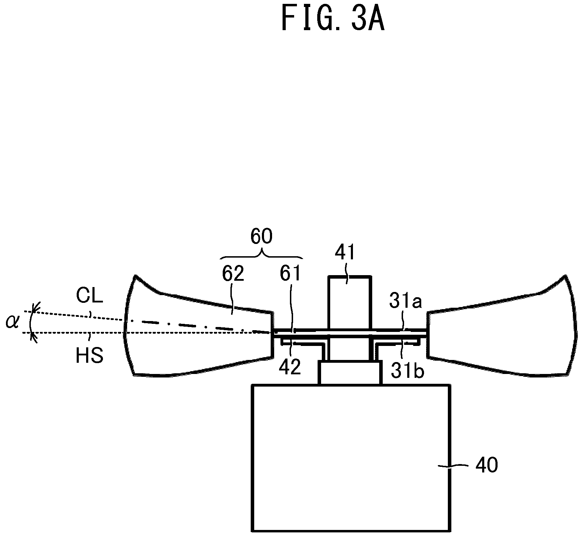

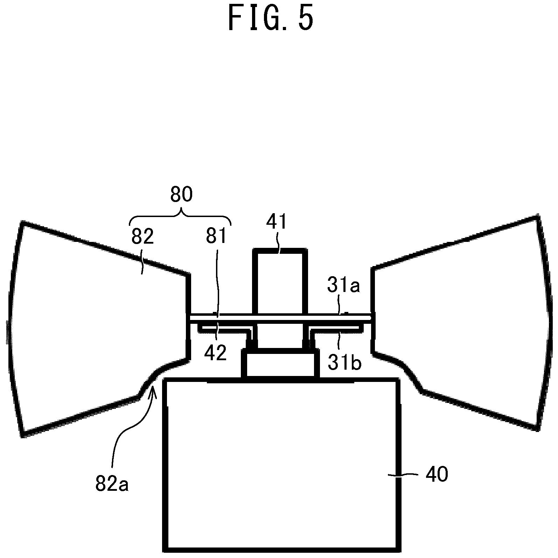

FIG. 2 is a projection view of the airflow producing unit 32 while rotating. FIG. 2 shows the airflow producing unit 32 in a projection view in which the locus of rotation of each blade 321 shown in FIG. 7 is projected on a virtual plane including a centerline of the rotation shaft 41. The same applies to FIGS. 3A and 5 referred to later.

The motor 40 includes the rotation shaft 41 and a bearing surface 42 that rotates together with the rotation shaft 41. The rotation shaft 41 protrudes from the bearing surface 42. The boss 31 of the propeller-shaped impeller 30 for a railway carriage air-conditioning apparatus is mounted on the bearing surface 42. When the propeller-shaped impeller 30 for a railway carriage air-conditioning apparatus is mounted on the bearing surface 42, the inner periphery of the airflow producing unit 32 facing the rotation shaft 41 is located inward from the outer peripheral surface of the motor 40 in the radial direction of the rotation shaft 41.

The boss 31 has a first end surface 31a that comes in contact with the bearing surface 42 while having one end in a thickness direction facing the bearing surface 42 and fitted to the rotation shaft 41, and a second end surface 31b that comes in contact with the bearing surface 42 while having the other end in the thickness direction facing the bearing surface 42 and fitted to the rotation shaft 41. FIG. 2 shows the second end surface 31b in contact with the bearing surface 42. The thickness direction of the boss 31 refers to a direction parallel to the rotation shaft 41 of the boss 31.

The propeller-shaped impeller 30 for a railway carriage air-conditioning apparatus according to the present embodiment has a shape with a degree of symmetry of 1.0 defined by X/Y, where X is the height of the airflow producing unit 32 from the first end surface 31a, and Y is the height of the airflow producing unit 32 from the second end surface 31b. More specifically, X and Y are 50 mm.

The height of the airflow producing unit 32 from the first end surface 31a herein refers to the height of the airflow producing unit 32 from the first end surface 31a along the rotation shaft 41 of the motor 40 in a direction from the second end surface 31b toward the first end surface 31a. The height of the airflow producing unit 32 from the second end surface 31b herein refers to the height of the airflow producing unit 32 from the second end surface 31b along the rotation shaft 41 of the motor 40 in a direction from the first end surface 31a toward the second end surface 31b.

As shown in FIG. 1B, the propeller-shaped impeller 30 for a railway carriage air-conditioning apparatus having the shape with the degree of symmetry of 1.0 does not contact other components, such as the cover 12 or the motor 40, when attached to the motor 40 upside down, that is, turned over from the state shown in FIG. 1A. The propeller-shaped impeller 30 for a railway carriage air-conditioning apparatus can thus blow air downward.

The propeller-shaped impeller 30 for a railway carriage air-conditioning apparatus is thus widely usable for upward blowing and downward blowing. This eliminates the need to prepare two different propeller-shaped impellers for railway carriage air-conditioning apparatuses separately for upward blowing and downward blowing, and reduces the variety of propeller-shaped impellers for railway carriage air-conditioning apparatuses.

In the present embodiment, X = Y. However, any structure having a degree of symmetry defined by A/B greater than 1.0 and lower than or equal to 1.3 has similar effects, where A is the height of the airflow producing unit 32 from the first or second end surface 31a or 31b, and B is the height of the airflow producing unit 32 from the other end surface (where A ≥ B) in FIG. 2. To further reduce the likelihood of the upside-down propeller-shaped impeller 30 for a railway carriage air-conditioning apparatus contacting other components, the degree of symmetry defined by A/B may be lower than or equal to 1.2, and more specifically lower than or equal to 1.1.

For railway carriages, the outdoor-unit chamber R1 tends to have the lowest possible height. The propeller-shaped impeller 30 for a railway carriage air-conditioning apparatus used in a railway carriage is thus flatter than impellers for other uses. More specifically, the aspect ratio defined by C/D falls within the range of 0.10 to 0.16 inclusive, where C is the total height of the airflow producing unit 32, and D is the diameter of the airflow producing unit 32 in FIG. 2.

The total height C of the airflow producing unit 32 refers to the distance from an end point of the airflow producing unit 32 at the height A from the first end surface 31a to an end point of the airflow producing unit 32 at the height B from the second end surface 31b in a direction parallel to the rotation shaft 41. The diameter D of the airflow producing unit 32 refers to the diameter of a virtual circle representing the locus of the end point of the airflow producing unit 32 farthest from the rotation shaft 41 in the radial direction of the rotation shaft 41.

The airflow producing unit 32 having the aspect ratio defined by C/D lower than or equal to 0.16 has a large space E between the airflow producing unit 32 and the bottom surface 11a that serves as a mount surface for receiving the motor 40. In other words, the airflow producing unit 32 has a sufficiently wide flow path for an airflow produced by the airflow producing unit 32, and thus reduces a pressure loss. The airflow producing unit 32 having the aspect ratio defined by C/D higher than or equal to 0.10 is less likely to be too flat to degrade the capability of taking in air.

### Embodiment 2

FIG. 2 shows the airflow producing unit 32 having a forward inclination angle of 0° indicating the inclination of the airflow producing unit 32 with respect to a virtual plane parallel to the first and second end surfaces 31a and 31b. The airflow producing unit 32 is sufficiently flat when the sum of A + B is lower than or equal to 115 mm, or more specifically, when the height A falls within the range of 1 to 65 mm inclusive and the height B falls within the range of 1 to 50 mm inclusive. Thus, with the airflow producing unit 32 having a forward inclination angle, the propeller-shaped impeller 30 for a railway carriage air-conditioning apparatus is less likely to contact other components when turned over. Specific examples of a propeller-shaped impeller for a railway carriage air-conditioning apparatus with an airflow producing unit having a forward inclination angle will be described below.

As shown in FIG. 3A, a propeller-shaped impeller 60 for a railway carriage air-conditioning apparatus according to the present embodiment includes a boss 61 and an airflow producing unit 62 protruding from the boss 61 as in Embodiment 1, but differs in that the airflow producing unit 62 has a forward inclination angle α.

In the present embodiment, the forward inclination angle α is not greater than 40°. The propeller-shaped impeller 60 for a railway carriage air-conditioning apparatus can be turned over when attached and is thus usable for both upward blowing and downward blowing. When the propeller-shaped impeller 60 is turned over, the sign indicating the forward inclination angle is inversed. The forward inclination angle herein is thus expressed in an absolute value. In other words, the forward inclination angle refers to the forward inclination angle expressed in an absolute value exceeding 0°.

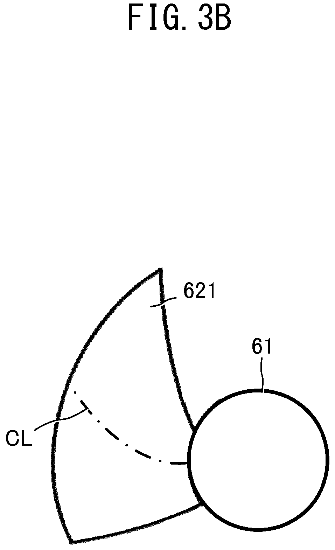

The forward inclination angle α will be described with reference to FIG. 3B. As shown in FIG. 3B, a blade centerline CL is defined with the locus of a middle point of a chord of a blade 621 included in the airflow producing unit 62. As shown in FIG. 3A, the forward inclination angle α refers to an angle formed by the blade centerline CL and a virtual plane HS parallel to the first and second end surfaces 31a and 31b.

In addition to the advantageous effects produced by Embodiment 1, the propeller-shaped impeller 60 for a railway carriage air-conditioning apparatus according to the present embodiment having the forward inclination angle α can optimize at least the energy efficiency for producing an airflow, the heat exchange efficiency of the first and second outdoor heat exchangers 21a and 21b, or the noiselessness in the outdoor-unit chamber R1.

### Embodiment 3

FIGS. 2 and 3A do not clearly show a stagger angle representing the inclination of the airflow producing units 32 and 62 for railway carriage air-conditioning apparatuses with respect to a virtual plane parallel to the rotation shaft 41. The airflow producing units 32 and 62 in which the sum of A + B is not greater than 115 mm are sufficiently flat. Thus, the propeller-shaped impellers 30 and 60 for railway carriage air-conditioning apparatuses with a small stagger angle are less likely to contact other components when turned over. Specific examples of a propeller-shaped impeller for a railway carriage air-conditioning apparatus with an airflow producing unit having a restricted stagger angle will be described below.

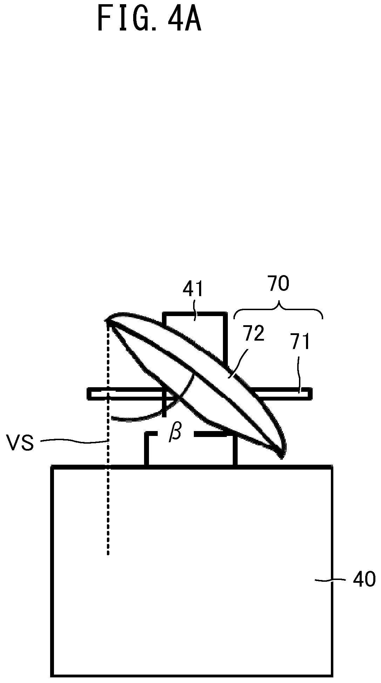

As shown in FIG. 4A, a propeller-shaped impeller 70 for a railway carriage air-conditioning apparatus according to the present embodiment includes a boss 71 and an airflow producing unit 72 protruding from the boss 71 as in Embodiments 1 and 2, but differs in that the airflow producing unit 72 has a stagger angle β restricted to 75° or smaller. More specifically, the stagger angle β is restricted to 60°, or may be smaller.

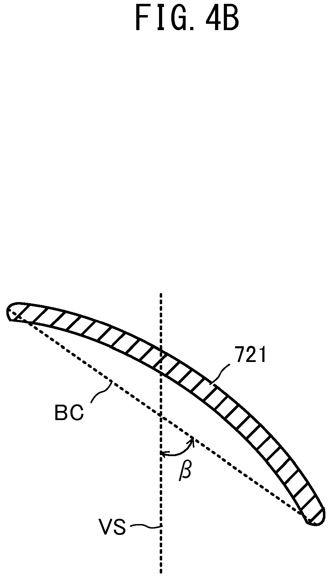

The stagger angle β will be described with reference to FIG. 4B. FIG. 4B is an expansion plan of a cross section of a blade 721 included in the airflow producing unit 72, taken along a side surface of a virtual cylinder around the rotation shaft 41 of the motor 40. In this expansion plan, the stagger angle β refers to an angle formed by a blade chord BC representing the chord and a virtual plane VS parallel to the rotation shaft 41 of the motor 40. When the stagger angle varies in the radial direction of the rotation shaft 41, the stagger angle β refers to the largest stagger angle.

The propeller-shaped impeller 70 for a railway carriage air-conditioning apparatus according to the present embodiment has the stagger angle β restricted to 75° or smaller. In addition to the advantageous effects of Embodiment 1, the propeller-shaped impeller 70 for a railway carriage air-conditioning apparatus thus prevents the rotation rate from increasing excessively, and optimizes at least the energy efficiency for producing an airflow, the heat exchange efficiency of the first and second outdoor heat exchangers 21a and 21b, or the noiselessness in the outdoor-unit chamber R1.

### Embodiment 4

Although the sum of A + B is restricted to 115 mm or smaller in the airflow producing units 62 and 72 in Embodiments 2 and 3, the sum of A + B may exceed 115 mm. According to the invention, the airflow producing units 62 and 72 have a cutout to avoid contact with other components. Specific examples will be described below.

As shown in FIG. 5, a propeller-shaped impeller 80 for a railway carriage air-conditioning apparatus according to the present embodiment includes a boss 81 and an airflow producing unit 82 protruding from the boss 81 as in Embodiments 1 to 3, but differs in that the airflow producing unit 82 has a cutout 82a to avoid contact with a corner of an upper surface of the motor 40.

The cutout 82a is defined by a portion of the airflow producing unit 82 having a low height from one end to the other end in the direction in which the rotation shaft 41 extends. More specifically, the cutout 82a is defined by an inner peripheral portion of the airflow producing unit 82 having a locally low height adjacent to the rotation shaft 41 in the radial direction of the rotation shaft 41.

The airflow producing unit 82 according to the present embodiment has the sum of A + B of greater than 115 mm. The cutout 82a prevents the airflow producing unit 82 having a total height higher than the airflow producing units 62 and 72 according to Embodiments 2 and 3 from contacting the motor 40.

The airflow producing unit 82 has a degree of symmetry defined by A/B greater than 1.0 and lower than or equal to 1.3 as in Embodiments 1 to 3. Thus, the airflow producing unit 82 attached to the motor 40 while being turned over with the cutout 82a facing the cover 12 shown in FIG. 1A does not contact the motor 40.

The present disclosure is not limited to the embodiments described above, and may be modified in the following manners.

Although the rotation shaft 41 of the motor 40 extends vertically and the outdoor blower 24 blows air upward and downward in Embodiments 1 to 4, the rotation shaft 41 of the motor 40 may extend in a direction other than the vertical direction. The outdoor blower 24 may produce an airflow in a direction other than the vertical direction, such as a lateral direction or an oblique direction.

Although the airflow producing unit 32 shown in FIG. 7 includes three blades 321, the airflow producing unit 32 may include any number of blades 321. The airflow producing unit 32 may include two, four, or more blades 321.

In Embodiment 4, the cutout 82a of the airflow producing unit 82 may have any shape. The cutout 82a may have any shape that avoids interference with other components, and may be, for example, circular, triangular, quadrangular, or in a shape combining these.

The foregoing describes some example embodiments for explanatory purposes. Although the foregoing discussion has presented specific embodiments, persons skilled in the art will recognize that changes may be made in form and detail without departing from the scope of the invention as defined by the appended set of claims. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

### Industrial Applicability

A railway carriage air-conditioning apparatus according to the present disclosure is usable for air-conditioning a railway carriage chamber. A propeller-shaped impeller according to the present disclosure is particularly suitable for air-conditioning a railway carriage chamber, but may have other uses.

### Reference Signs List 10 Housing

11 Base frame
11a Bottom surface
12 Cover
121 First vent
122a, 122b Second vent
13 Partition plate
20 Air-conditioning apparatus
21 Outdoor heat exchanger
21a First outdoor heat exchanger
21b Second outdoor heat exchanger
22 Collaborative system
22a Expander
22b Indoor heat exchanger
22c Vapor-liquid separator
22d Compressor
22e Refrigerant pipe
23 Indoor blower
24 Outdoor blower
30, 60, 70, 80 Propeller-shaped impeller for railway carriage air-conditioning apparatus
31, 61, 71, 81 Boss
32, 62, 72, 82 Airflow producing unit
321, 621, 721 Blade
31a First end surface
31b Second end surface
40 Motor
41 Rotation shaft
42 Bearing surface
50 Bellmouth
82a Cutout
90 Propeller-shaped impeller for railway carriage air-conditioning apparatus
91 Upper end portion
100 Railway carriage air-conditioning apparatus
R1 Outdoor-unit chamber
R2 Indoor-unit chamber
CL Blade centerline
HS, VS Virtual plane
BC Blade chord

## Claims

1. A propeller-shaped impeller (30, 60, 70, 80), comprising:
a boss (31, 61, 71, 81) rotatable with a rotation shaft (41) of a motor (40) having a bearing surface (42) from which the rotation shaft (41) protrudes, the boss (31, 61, 71, 81) being configured to be placed on the bearing surface (42) as being fitted to the rotation shaft (41) of the motor (40); and
an airflow producing unit (32, 62, 72, 82) including a plurality of blades (321, 621, 721) protruding from the boss (31, 61, 71, 81) outwardly in a radial direction of the rotation shaft (41) and rotatable together with the boss (31, 61, 71, 81) to produce an airflow,
wherein the boss (31, 61, 71, 81) includes a first end surface (31a) configured to come in contact with the bearing surface (42) when the boss (31, 61, 71, 81) is fitted to the rotation shaft (41) with one end of the boss (31, 61, 71, 81) in a thickness direction parallel to the rotation shaft (41) facing the bearing surface (42), and a second end surface (31b) configured to come in contact with the bearing surface (42) when the boss (31, 61, 71, 81) is fitted to the rotation shaft (41) with another end of the boss (31, 61, 71, 81) in the thickness direction facing the bearing surface (42), and
each of said plurality of blades (321, 621, 721) having a first free end and a second free end along said thickness direction; said first and second free ends being opposite to each other, said first free end being arranged on the side of said first end surface (31a) and said second free end being arranged on the side of said second end surface (31b),
**characterized in that** a degree of symmetry defined by A/B is greater than 1.0 and lower than or equal to 1.3, where A is a height of the airflow producing unit (32, 62, 72, 82) from the first end surface (31a) to the first free end, along the thickness direction, B is a height of the airflow producing unit (32, 62, 72, 82) from the second end surface (31b) to the second free end, along the thickness direction, and A > B; and **in that** the airflow producing unit (32, 62, 72, 82) has a cutout (82a) to avoid contact with the motor (40).

2. The propeller-shaped impeller (30, 60, 70, 80) according to claim 1, wherein
a sum of the height A of the airflow producing unit (32, 62, 72, 82) from the first end surface (31a) and the height B of the airflow producing unit (32, 62, 72, 82) from the second end surface (31b) is not greater than 115 mm, and
the airflow producing unit (32, 62, 72, 82) has a forward inclination angle.

3. The propeller-shaped impeller (30, 60, 70, 80) according to claim 1 or 2, wherein
a sum of the height A of the airflow producing unit (32, 62, 72, 82) from the first end surface (31a) and the height B of the airflow producing unit (32, 62, 72, 82) from the second end surface (31b) is not greater than 115 mm, and
the airflow producing unit (32, 62, 72, 82) has a stagger angle of not greater than 75°.

4. The propeller-shaped impeller (30, 60, 70, 80) according to claim 1, wherein
a sum of the height A of the airflow producing unit (32, 62, 72, 82) from the first end surface (31a) and the height B of the airflow producing unit (32, 62, 72, 82) from the second end surface (31b) exceeds 115 mm.

5. The propeller-shaped impeller (30, 60, 70, 80) according to any one of claims 1 to 4, wherein an aspect ratio defined by C/D falls within a range of 0.10 to 0.16 inclusive, where C is a total height of the airflow producing unit (32, 62, 72, 82) and D is a diameter of the airflow producing unit (32, 62, 72, 82).

6. A railway carriage air-conditioning apparatus (100), comprising:
an outdoor heat exchanger (21) having a structure to allow refrigerant to flow inside and configured to exchange heat with air;
an outdoor blower (24) including the propeller-shaped impeller (30, 60, 70, 80) according to any one of claims 1 to 5, and the motor (40) to which the propeller-shaped impeller (30, 60, 70, 80) is attached, and configured to take in air from outside a railway carriage, cause the air to pass through the outdoor heat exchanger (21), and discharge the air out of the railway carriage; and
a collaborative system (22) to provide a refrigerating cycle together with the outdoor heat exchanger (21) using the refrigerant.

## Patentansprüche

1. Ein propellerförmiges Laufrad (30, 60, 70, 80), umfassend:
eine Nabe (31, 61, 71, 81), die mit einer Rotationswelle (41) eines Motors (40) drehbar ist, wobei der Motor (40) eine Lagerfläche (42) aufweist, aus der sich die Rotationswelle (41) erstreckt, und wobei die Nabe (31, 61, 71, 81) dazu eingerichtet ist, auf der Lagerfläche (42) angebracht zu werden, indem sie an die Rotationswelle (41) des Motors (40) angepasst ist; und
eine Luftströmungserzeugungseinheit (32, 62, 72, 82) mit einer Mehrzahl von Schaufeln (321, 621, 721), die sich von der Nabe (31, 61, 71, 81) radial nach außen in Richtung der Rotationswelle (41) erstrecken und gemeinsam mit der Nabe (31, 61, 71, 81) drehbar sind, um einen Luftstrom zu erzeugen,
wobei die Nabe (31, 61, 71, 81) eine erste Stirnfläche (31a) aufweist, die dazu eingerichtet ist, in Kontakt mit der Lagerfläche (42) zu kommen, wenn die Nabe (31, 61, 71, 81) an der Rotationswelle (41) angebracht wird, wobei ein Ende der Nabe (31, 61, 71, 81) in einer Dickenrichtung parallel zur Rotationsachse (41) der Lagerfläche (42) zugewandt ist, und eine zweite Stirnfläche (31b), die dazu eingerichtet ist, in Kontakt mit der Lagerfläche (42) zu kommen, wenn die Nabe (31, 61, 71, 81) an der Rotationswelle (41) angebracht wird, wobei ein anderes Ende der Nabe (31, 61, 71, 81) in der Dickenrichtung der Lagerfläche (42) zugewandt ist, und
wobei jede der Schaufeln (321, 621, 721) ein erstes freies Ende und ein zweites freies Ende entlang der Dickenrichtung aufweist; wobei das erste und das zweite freie Ende einander gegenüberliegen, wobei das erste freie Ende auf der Seite der ersten Stirnfläche (31a) angeordnet ist, und wobei das zweite freie Ende auf der Seite der zweiten Stirnfläche (31b) angeordnet ist,
**dadurch gekennzeichnet, dass** ein Symmetriegrad, definiert durch A/B, größer als 1,0 und kleiner oder gleich 1,3 ist, wobei A eine Höhe der Luftströmungserzeugungseinheit (32, 62, 72, 82) von der ersten Stirnfläche (31a) bis zum ersten freien Ende entlang der Dickenrichtung ist, wobei B eine Höhe der Luftströmungserzeugungseinheit (32, 62, 72, 82) von der zweiten Stirnfläche (31b) bis zum zweiten freien Ende entlang der Dickenrichtung ist, und wobei A > B gilt; und dadurch, dass die Luftströmungserzeugungseinheit (32, 62, 72, 82) eine Aussparung (82a) aufweist, um einen Kontakt mit dem Motor (40) zu vermeiden.

2. Das propellerförmige Laufrad (30, 60, 70, 80) nach Anspruch 1, wobei:
eine Summe der Höhe A der Luftströmungserzeugungseinheit (32, 62, 72, 82) von der ersten Stirnfläche (31a) und der Höhe B der Luftströmungserzeugungseinheit (32, 62, 72, 82) von der zweiten Stirnfläche (31b) nicht größer als 115 mm ist, und
die Luftströmungserzeugungseinheit (32, 62, 72, 82) einen Vorwärtsneigungswinkel aufweist.

3. Das propellerförmige Laufrad (30, 60, 70, 80) nach Anspruch 1 oder 2, wobei:
eine Summe der Höhe A der Luftströmungserzeugungseinheit (32, 62, 72, 82) von der ersten Stirnfläche (31a) und der Höhe B der Luftströmungserzeugungseinheit (32, 62, 72, 82) von der zweiten Stirnfläche (31b) nicht größer als 115 mm ist, und
die Luftströmungserzeugungseinheit (32, 62, 72, 82) einen Versatzwinkel von nicht mehr als 75° aufweist.

4. Das propellerförmige Laufrad (30, 60, 70, 80) nach Anspruch 1, wobei eine Summe der Höhe A der Luftströmungserzeugungseinheit (32, 62, 72, 82) von der ersten Stirnfläche (31a) und der Höhe B der Luftströmungserzeugungseinheit (32, 62, 72, 82) von der zweiten Stirnfläche (31b) 115 mm überschreitet.

5. Das propellerförmige Laufrad (30, 60, 70, 80) nach einem der Ansprüche 1 bis 4, wobei ein Seitenverhältnis, definiert durch C/D, im einschließlichen Bereich von 0,10 bis 0,16 liegt, wobei C eine Gesamthöhe der Luftströmungserzeugungseinheit (32, 62, 72, 82) und D ein Durchmesser der Luftströmungserzeugungseinheit (32, 62, 72, 82) ist.

6. Eine Klimaanlage für Eisenbahnwagen (100), umfassend:
einen Außenwärmetauscher (21), der eine Struktur aufweist, die einem Kältemittel ein Einströmen ermöglicht, und dazu eingerichtet ist, Wärme mit Luft auszutauschen;
einen Außenlüfter (24), der das propellerförmige Laufrad (30, 60, 70, 80) nach einem der Ansprüche 1 bis 5 und den Motor (40), an dem das Laufrad (30, 60, 70, 80) befestigt ist, umfasst und dazu eingerichtet ist, Luft außerhalb eines Eisenbahnwagens aufzunehmen, die Luft durch den Außenwärmetauscher (21) zu führen und die Luft aus dem Eisenbahnwagen abzulassen; und
ein zusammenwirkendes System (22), um gemeinsam mit dem Außenwärmetauscher (21) unter Verwendung des Kältemittels einen Kältekreislauf bereitzustellen.

## Revendications

1. Turbine en forme d'hélice (30, 60, 70, 80), comprenant :
un bossage (31, 61, 71, 81) rotatif avec un arbre de rotation (41) d'un moteur (40) présentant une surface d'appui (42) à partir de laquelle l'arbre de rotation (41) fait saillie, le bossage (31, 61, 71, 81) étant configuré pour être placé sur la surface d'appui (42) en ce qu'il est monté sur l'arbre de rotation (41) du moteur (40) ; et
une unité de production de flux d'air (32, 62, 72, 82) comportant une pluralité de pales (321, 621, 721) faisant saillie à partir du bossage (31, 61, 71, 81) vers l'extérieur dans une direction radiale de l'arbre de rotation (41) et rotatives conjointement avec le bossage (31, 61, 71, 81) pour produire un flux d'air,
dans lequel le bossage (31, 61, 71, 81) comporte une première surface d'extrémité (31a) configurée pour entrer en contact avec la surface d'appui (42) lorsque le bossage (31, 61, 71, 81) est monté sur l'arbre de rotation (41) avec une extrémité du bossage (31, 61, 71, 81) dans une direction d'épaisseur parallèle à l'arbre de rotation (41) faisant face à la surface d'appui (42), et une seconde surface d'extrémité (31b) configurée pour entrer en contact avec la surface d'appui (42) lorsque le bossage (31, 61, 71, 81) est monté sur l'arbre de rotation (41) avec une autre extrémité du bossage (31, 61, 71, 81) dans la direction d'épaisseur faisant face à la surface d'appui (42), et
chacune de ladite pluralité de pales (321, 621, 721) présentant une première extrémité libre et une seconde extrémité libre le long de ladite direction d'épaisseur ; lesdites première et seconde extrémités libres étant opposées l'une à l'autre, ladite première extrémité libre étant agencée sur le côté de ladite première surface d'extrémité (31a) et ladite seconde extrémité libre étant agencée sur le côté de ladite seconde surface d'extrémité (31b),
**caractérisé en ce qu'**un degré de symétrie défini par A/B est supérieur à 1,0 et inférieur ou égal à 1,3, où A est une hauteur de l'unité de production de flux d'air (32, 62, 72, 82) de la première surface d'extrémité (31a) à la première extrémité libre, le long de la direction d'épaisseur, B est une hauteur de l'unité de production de flux d'air (32, 62, 72, 82) de la seconde surface d'extrémité (31b) à la seconde extrémité libre, le long de la direction d'épaisseur, et A > B ; et **en ce que** l'unité de production de flux d'air (32, 62, 72, 82) présente une découpe (82a) pour éviter tout contact avec le moteur (40).

2. Turbine en forme d'hélice (30, 60, 70, 80) selon la revendication 1, dans laquelle
une somme de la hauteur A de l'unité de production de flux d'air (32, 62, 72, 82) à partir de la première surface d'extrémité (31a) et de la hauteur B de l'unité de production de flux d'air (32, 62, 72, 82) à partir de la seconde surface d'extrémité (31b) n'est pas supérieure à 115 mm, et
l'unité de production de flux d'air (32, 62, 72, 82) présente un angle d'inclinaison vers l'avant.

3. Turbine en forme d'hélice (30, 60, 70, 80) selon la revendication 1 ou 2, dans laquelle
une somme de la hauteur A de l'unité de production de flux d'air (32, 62, 72, 82) à partir de la première surface d'extrémité (31a) et de la hauteur B de l'unité de production de flux d'air (32, 62, 72, 82) à partir de la seconde surface d'extrémité (31b) n'est pas supérieure à 115 mm, et
l'unité de production de flux d'air (32, 62, 72, 82) présente un angle de décalage n'excédant pas 75°.

4. Turbine en forme d'hélice (30, 60, 70, 80) selon la revendication 1, dans laquelle
une somme de la hauteur A de l'unité de production de flux d'air (32, 62, 72, 82) à partir de la première surface d'extrémité (31a) et de la hauteur B de l'unité de production de flux d'air (32, 62, 72, 82) à partir de la seconde surface d'extrémité (31b) dépasse 115 mm.

5. Turbine en forme d'hélice (30, 60, 70, 80) selon l'une quelconque des revendications 1 à 4, dans laquelle un rapport de forme défini par C/D se situe dans une plage de 0,10 à 0,16 inclus, où C est une hauteur totale de l'unité de production de flux d'air (32, 62, 72, 82) et D est un diamètre de l'unité de production de flux d'air (32, 62, 72, 82).

6. Appareil de climatisation de wagons de chemin de fer (100), comprenant :
un échangeur de chaleur extérieur (21) présentant une structure permettant au réfrigérant de s'écouler à l'intérieur et configurée pour échanger de la chaleur avec de l'air ;
une soufflante extérieure (24) comportant la turbine en forme d'hélice (30, 60, 70, 80) selon l'une quelconque des revendications 1 à 5, et le moteur (40) auquel est fixée la turbine en forme d'hélice (30, 60, 70, 80), et configurée pour aspirer de l'air depuis l'extérieur d'un wagon, faire passer l'air à travers l'échangeur de chaleur extérieur (21), et évacuer l'air hors du wagon de chemin de fer ; et
un système collaboratif (22) pour fournir un cycle de réfrigération conjointement avec l'échangeur de chaleur extérieur (21) à l'aide du réfrigérant.
